Europäisches Patentamt

European Patent Office

Office européen des brevets

(11) Publication number: **0 407 817 A1**

# EUROPEAN PATENT APPLICATION

(21) Application number: **90112290.3**

(22) Date of filing: **27.06.90**

(51) Int. Cl.5: **G06F 15/24**

The title of the invention has been amended (Guidelines for Examination in the EPO, A-III, 7.3).

(30) Priority: **27.06.89 JP 166022/89**

(43) Date of publication of application:
**16.01.91 Bulletin 91/03**

(84) Designated Contracting States:
**DE GB IT**

(71) Applicant: **SHARP KABUSHIKI KAISHA**
**22-22 Nagaike-cho Abeno-ku**
**Osaka 545(JP)**

(72) Inventor: **Goto, Kazuyuki**
**2-3-15 Harinakano, Higashi-Sumiyoshi-ku**
**Osaka-shi, Osaka-fu(JP)**
Inventor: **Nakamura, Yasuhide**
**527-12 Tsutsui-cho**
**Yamato-Koriyama-shi, Nara-ken(JP)**

(74) Representative: **TER MEER - MÜLLER -**
**STEINMEISTER & PARTNERNER**
**Mauerkircherstrasse 45**
**D-8000 München 80(DE)**

(54) **Apparatus for passing orders.**

(57) The apparatus for informing ordered items received from a customer to a plurality of places where the ordered items are prepared includes a unit (1) for inputting an information of the ordered items by an operator, and a plurality of display units $(P_1, P_2...)$ for displaying the information of the ordered items inputted in the input unit. The apparatus also is able to detect a display unit among the plurality of display units which is unable to inform the ordered items, and to indicate the unable display unit to the operator. The apparatus includes a unit (7,8) for storing the information of the ordered items. The storing unit includes an item preset memory (7) for storing an information of the numbers of a price-look-up unit prices and names of the ordered itrems as well as a number indicating the unable display unit and also includes a printer text preset memory (8) for storing names of the places where the unable display units are installed. The apparatus includes a visual display unit (5) coupled with the input unit for displaying each price of the ordered items.

*Fig.2*

Xerox Copy Centre

# APPARATUS FOR INFORMING ORDERS

## BACKGROUND OF THE INVENTION

### 1. Field of The Invention

The present invention relates to an apparatus for informing the ordered items received from a customer to a plurality of places where the ordered items are prepared.

### 2. Description of The Related Art

The inventors know an order indicating apparatus which has an electronic cash register for inputting the ordered items received from a customer by an operator so as to calculate the bill and to print a receipt for the customer.

Furthermore, the above mentioned apparatus is so constructed that the names and the quantities of the ordered items are transmitted from the electronic cash register to a printer installed at a kitchen in a restaurant, and then a cook will prepare the ordered items in accordance with the names and the qunantities of the items recorded on a recording paper outputted from the printer in the kitchen.

However the above-mentioned apparatus has a problem in a case of a malfunction. For instances at a time when the printer in the kitchen is broken down, the power supply to the printer is disconnected, the recording paper of the printer is used up or not installed, the informtion of the ordered items are not transmitted to the printer or not printed out, then the cook in the kitchen is unable to prepare the items ordered by the customer.

## SUMMARY OF THE INVENTION

It is an object of the present invention to provide an apparatus for informing the ordered items received from a customer to a plurality of places.

The object of the present invention can be achieved by an apparatus for informing ordered items received from a customer to a plurality of places includes a unit for inputting an information of the ordered items by an operator, a plurality of display units for displaying the information of the ordered items inputted in the input unit, the display units being disposed at the places respectively, a unit for detecting at least one display unit among the plurality of display units which is unable to display the ordered items, and a unit for indicating the unable display unit to the operator.

Preferably, the apparatus further includes a unit for controlling the plurality of display unit so that the information of the ordered items is displayed on each of the display unit selectively in accordance with the ordered items inputted in the input unit.

Further preferably, the indicating unit is capable of informing the information of the ordered items inputted in the input unit to the operator.

The apparatus further includes unit for storing the information of the ordered items, preferably.

More preferably, the storing unit includes an item preset memory for storing an information of the numbers of a price-look-up, unit prices and names of the ordered items as well as a number indicating the unable display unit.

The storing unit further preferably includes a printer text preset memory for storing names of the places where the unable display unit are installed.

The apparatus may further include a visual display unit coupled with the input unit for displaying each price of the ordered items.

Preferably, the visual display unit includes a liquid crystal display device.

Furthermore, the control unit and the detect unit are formed in a processing unit.

The processing unit includes preferably a microprocessor.

Moreover, the display unit includes a processing unit coupled with the input unit for processing the information of the items transmitted from the input unit.

The display unit further includes unit for printing the information.

The processing unit includes a microprocessor, preferably.

The printing mean may include a printer with a recording paper.

Preferably, the informing unit includes a printer with a recording paper.

Furthermore, the displaying unit includes a visual device, preferably.

The visual display device may include a liquid crystal display device.

Moreover, the visual display device includes a cathode-ray tube display device, preferably.

## BRIEF DESCRIPTION OF THE DRAWINGS

Fig. 1 illustrates a configuration of an embodiment of an apparatus for informing orders according to the present invention;

Fig. 2 illustrates a configuration of the electronic cash register shown in Fig. 1;

Fig. 3 illustrates a configuration of the item preset memory shown in Fig. 2;

Fig. 4 illustrates a configuration of the printer text preset memory shown in Fig. 2;

Fig. 5 is a schematic diagram illustrating a printer shown in Fig. 1;

Fig. 6 is a flow chart explaining the operation of a process circuit of the electronic cash register shown in Fig. 2;

Fig. 7 is a flow chart explaining the operation of a process circuit of the printer shown in Fig. 5;

Fig. 8 shows a sheet of recording paper printed by the printer shown in Fig. 5; and

Fig. 9 is a front view illustrating a sheet of recording paper printed by a printer of the electronic cash register shown in Fig. 2.

## DESCRIPTION OF THE PREFERRED EMBODIMENT

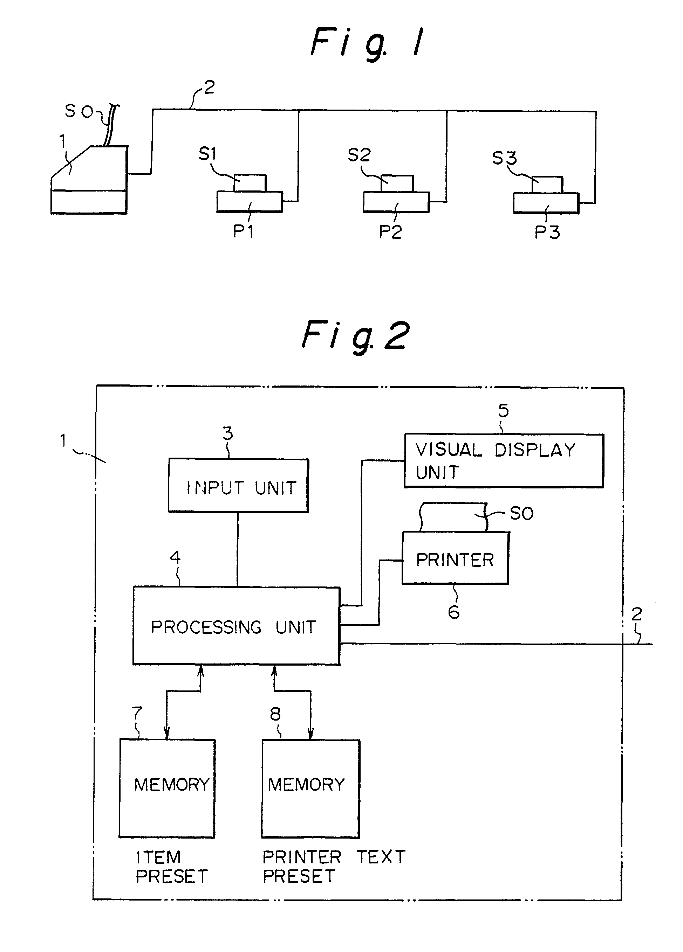

Fig. 1 illustrates a configuration of an embodiment of an apparatus for informing orders according to the present invention. As shown in Fig. 1, an electronic cash register 1 is connected to printers P1, P2, P3 via a line 2. These printers P1, P2, P3 served as a plurality of displaying units and are arranged in a kitchen, a salad bar and a cocktail lounge, respectively. Instead of the line 2, other substitutes which allow signal transmission may also be utilized. The information of the ordered items and the number of the items are inputted and registered in the electronic cash register 1, and then are transmitted to one of the three printers P1, P2, P3 installed in a place where the ordered items are prepared, in order to be printed on one of three sets of recording paper S1, S2, S3. A cook at each place will prepare the ordered items in accordance with the information printed on the recording paper.

At a time when the information of the ordered items such as the names and the quantities of the ordered items weren't printed on any of these three printers P1, P2, P3, due to unable printers, the information relating to the ordered items, that is, the names and the quantities of the ordered items, is printed on recording paper SO installed in the electronic cash register 1. Simultaneously, the information relating to the unable printer corresponding to these ordered items, that is, the information regarding the number and the location of the unable printer is printed on the recording paper SO. Therefore, when such information is printed on the recording paper SO, an attendant at the electronic cash register 1 is able to go to the place where the unable printer is installed and to inform the ordered items to a cook.

Fig. 2 illustrates a configuration of the electronic cash register 1 shown in Fig. 1. In a restaurant, after an attendant receives an order from a customer he or she actuates an input unit 3 to register the names and the quantities of the ordered items. The output from the input unit 3 is transmitted to a processing unit 4 which is composed of the control unit and the detecting unit, for example, a microprocessor. The processing unit 4 calculates the price of the ordered items in order to display the price and the registered ordered-items by a visual display unit 5 such as a liquid crystal display device. Simultaneously, the processing unit 4 control a printer 6 so that the printer 6 prints the information such as the price and the ordered items on the recording paper SO in order to issue a receipt and a chit ( will be described later ). An item preset memory 7 and a printer text preset memory 8 are coupled to the processing unit 4.

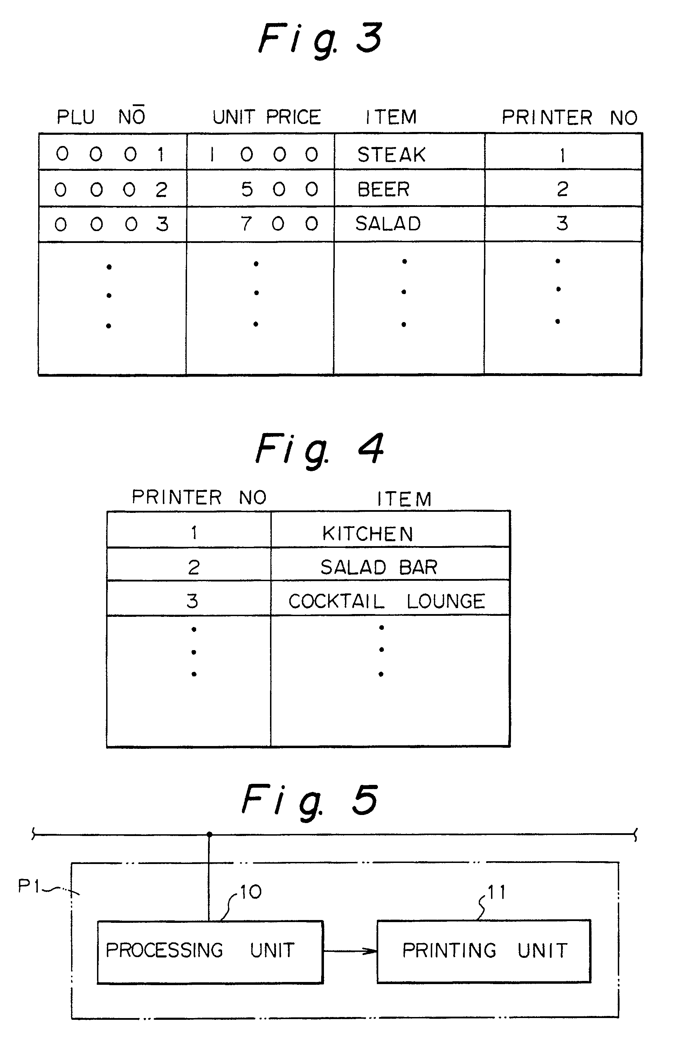

The item preset memory 7 is configured as shown in Fig. 3. The numbers of Price Look Up (PLU) corresponding to the ordered items, the unit prices of the ordered items, the unit prices of the ordered items, the names of the ordered items, and the numbers of printers installed in the place where the ordered items are prepared to be cooked are all stored in the item preset memory 7.

The printer text preset memory 8 is configured as shown in Fig. 4. The numbers of the printers P1, P2, P3 are stored in the printer text preset memory 8 in correspondence to the names of the places where the printers P1, P2, P3 are installed. In Figs. 3 and 4, the numbers of the printers correspond to the subscripts 1, 2, 3 of the printers P1, P2, P3, that is, when a customer ordered a steak, then a PLU No. "0001" and the quantity of the order are entered into the input unit 3, and are printed on the recording paper S1 of the printer P1 installed in a kitchen where the order is prepared.

Fig. 5 is a schematic diagram showing the printer P1. A processing unit 10 such as a microcomputer and a printing unit 11 for printing on the recording paper S1 are connected to the line. The remaining printers P2 and P3 have a similar configuration.

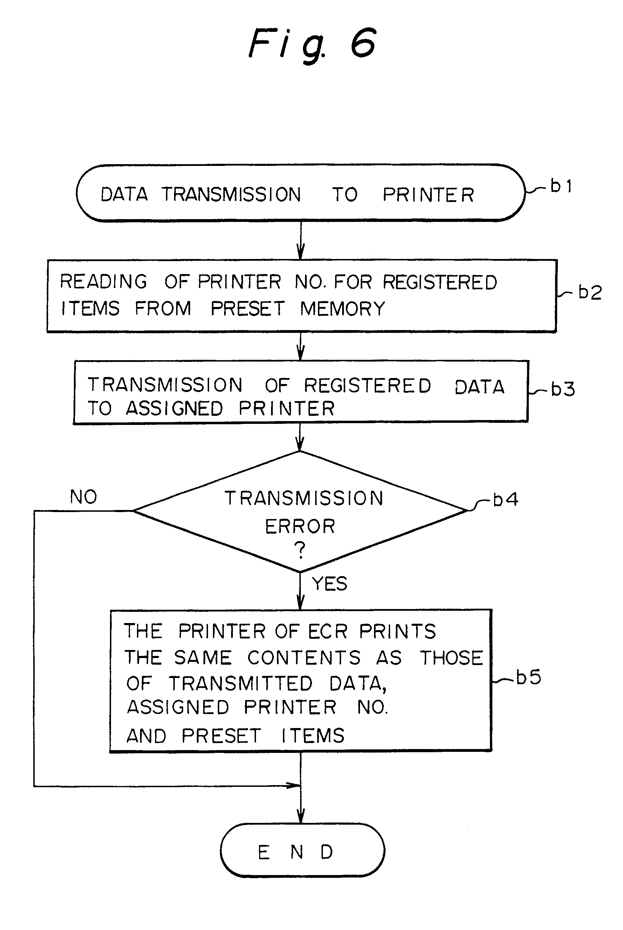

Fig. 6 is a flow chart explaining the operation of the processing unit 4 provided in the electronic cash register 1. As shown in Fig. 6, the operation flow of the processing unit 4 starts for transmitting a data to a printer at step b1. In step b2, at a time when the number of order items and a PLU number assigned for the ordered items are entered by the input unit 3, the item preset memory 7 reads the printer number assigned to the corresponding PLU number. In step b3, the data on the registered item, i.e., the names and the quantities of the ordered items are transmitted via the line 2 from the processing unit 4 to an assigned printer read by the item preset memory 7, for example, the printer P1.

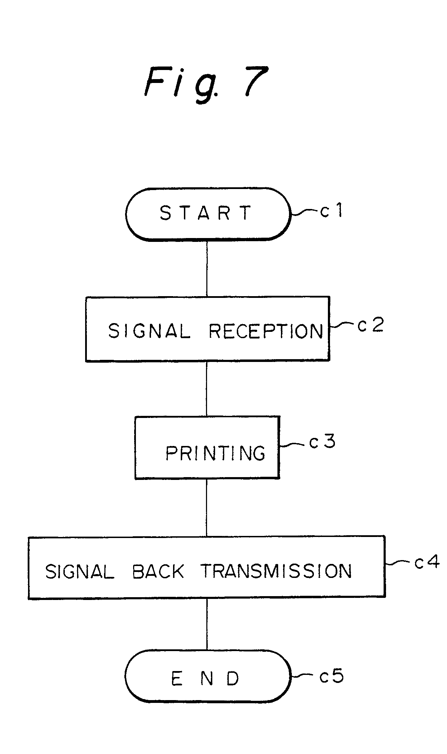

Fig. 7. is a flow chart explaining the operation of a processing unit 10 provided for the printer P1.

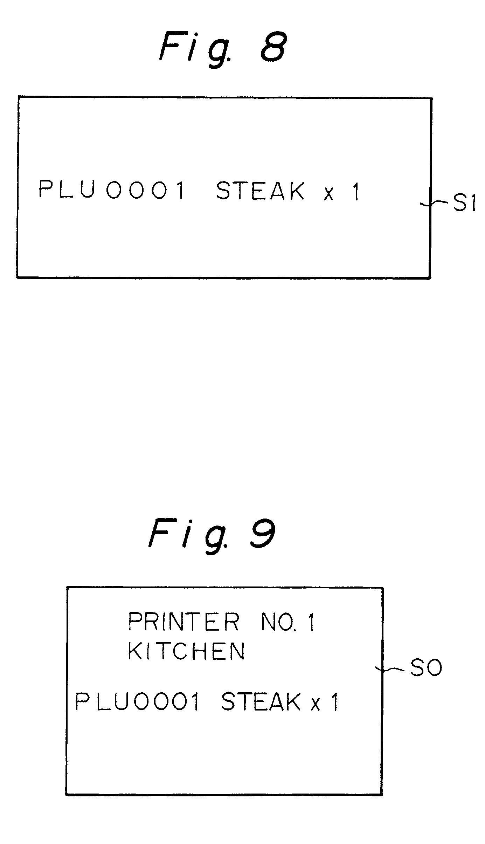

As shown in Fig. 7, the operation flow of the processing unit 10 starts at step cl and goes down to step c2, where data on the registered item is received from the electronic cash register 1. The contents of the data are printed on the recording paper S1 by the printing unit 11. In step c4, the printing is finished, and a signal showing the normal operation of the printer P1 is transmitted via the line 2 back to the electronic cash register 1. The sequence of the operation flow associated with the processing unit 10 thus terminates in step c5. As shown in Fig. 8, the printing unit 11 of the printer P1 prints the PLU number, the name of an ordered item, and the ordered quantities on the recording paper S1 of the printer P1 (in this embodiment the ordered quantities is one). The cooks and others can prepare the ordered item after receiving the information printed on the recording paper S1 of the printer P1.

Referring back to Fig. 6, in step b4, if the processing unit 4 provided in the electronic cash register 1 should fail to receive the signal from the printer P1, which is transmitted back in step c4 of Fig. 7, then the processing unit 4 assumes that a transmission error has occurred due to a malfunction. By the above-described method, in step b5, the printer of the electronic cash register 1 prints on the recording paper SO not only the same contents (the PLU number, the name of the ordered item and the quantity ordered) as those of the signal transmitted from the register 1 to the line 2, but also the number and the location of, for example, the printer P1 which has already been preset. Fig. 9 shows a state on which the above information is printed. As described above, the printer 6 of the electronic cash register 1 prints a slip called a chit shown in Fig. 9, other than the receipt issued when ordered items are registered. Thus, if any one of the printers P1, P2, P3 in the restaurant is unable to operate, an attendant at the electronic cash register 1 can bring the chit, i.e., the recording paper SO shown in Fig. 9 in order to hand it to cooks or others in the kitchen where the ordered items are prepared.

At a time when the information is printed on the recording paper SO as shown in Fig. 9, an attendant at the electronic cash register 1 can detect early that, for example, the printer P1 installed in the kitchen is unable to operate and the printer P1 does not appropriately print on the recording paper S1, thereby prompting action can be taken on the problem.

The present invention may be applied to a variety of places where orders are placed, not merely to restaurants. Instead of the printers P1, P2, P3, visual display devices, such as a liquid crystal display or a cathode-ray tube display, or voice display devices may be utilized.

As has been described, according to the present invention, even if the information of the ordered item entered by the input unit should fail to be displayed by the displaying unit, the order is placed without failure because the information of the ordered items is printed on the recording paper by the printing unit, so that an attendant can bring the paper to the kitchen for informing the ordered items to the cook.

Many widely different embodiments of the present invention may be constructed without departing from the spirit and scope of the present invention. It should be understood that the present invention is not limited to the specific embodiment described in this specification, except as defined in the appended claims.

## Claims

1. An apparatus for informing ordered items received from a customer to a plurality of places, said apparatus comprising:
means(1;3) for inputting an information of the ordered items by an operator; (p₁,p₂...) a plurality of display means/coupled with said input means for displaying the information of the ordered items inputted in said input means, said diplay means being disposed at the places, respectively;
means (4,8) detecting at least one display means among said plurality of display means which is unable to display the ordered items; and
means for indicating said unable display means to said operator.

2. An apparatus according to claim 1, wherein said apparatus further includes means for controlling said plurality of display means so that said information of said ordered items is displayed on each of said display means selectively in accordance with said ordered items inputted in said input means.

3. An apparatus according to claim 1, wherein said indicating means is capable of informing the information of the ordered items inputted in said input means to said operator.

4. An apparatus according to claim 1, wherein said apparatus further includes means (7,8) for storing the information of the ordered items.

5. An apparatus according to claim 4, wherein said storing means includes an item preset memory (7) for storing an information of the numbers of a price-look-up, unit prices and names of the ordered items as well as a number indicating said unable display means.

6. An apparatus according to claim 5, wherein said storing means further includes a printer text preset memory (8) for storing names of said places where said unable display means are installed.

7. An apparatus according to claim 1, wherein said apparatus further includes a visual display means-(5) coupled with said input means for displaying each price of the ordered items.

8. An apparatus according to claim 7, wherein said visual display means comprises a liquid crystal display device.

9. An apparatus according to claim 3, wherein said control means and said detect means are formed in a processing means.

10. An apparatus according to claim 9, wherein said processing means (4) comprises a microprocessor.

11. An apparatus according to claim 1, wherein said display means includes a processing means coupled with said input means for processing said information of said items transmitted from said input means.

12. An apparatus according to claim 11, wherein said display means further includes means for printing said information.

13. An apparatus according to claim 11, wherein said processing means comprises a microprocessor.

14. An apparatus according to claim 12, wherein said printing mean comprises a printer with a recording paper.

15. An apparatus according to claim 1, wherein said informing means compriees a printer with a recording paper.

16. An apparatus according to claim 1, wherein said displaying means comprises a visual device.

17. An apparatus according to claim 16, wherein said visual display device comprises a liquid crystal display device.

18. An apparatus according to claim 16, wherein said visual display device comprises a cathode-ray tube display device.

# Fig. 1

# Fig. 2

# Fig. 3

| PLU  NO̅ | UNIT PRICE | ITEM | PRINTER  NO |
|---|---|---|---|
| 0  0  0  1 | I  0  0  0 | STEAK | 1 |
| 0  0  0  2 | 5  0  0 | BEER | 2 |
| 0  0  0  3 | 7  0  0 | SALAD | 3 |
| ⋮ | ⋮ | ⋮ | ⋮ |

# Fig. 4

| PRINTER  NO | ITEM |
|---|---|
| 1 | KITCHEN |
| 2 | SALAD  BAR |
| 3 | COCKTAIL   LOUNGE |
| ⋮ | ⋮ |

# Fig. 5

P1

10 — PROCESSING   UNIT  →  11 — PRINTING  UNIT

# *Fig. 6*

```
        ┌──────────────────────────────────────────┐
        │   DATA  TRANSMISSION   TO   PRINTER       │── b1
        └──────────────────────────────────────────┘
                            │
                            ▼
        ┌──────────────────────────────────────────┐
        │  READING  OF PRINTER NO. FOR REGISTERED   │
        │  ITEMS  FROM  PRESET  MEMORY              │── b2
        └──────────────────────────────────────────┘
                            │
                            ▼
        ┌──────────────────────────────────────────┐
        │  TRANSMISSION  OF REGISTERED  DATA        │── b3
        │  TO ASSIGNED  PRINTER                     │
        └──────────────────────────────────────────┘
                            │
                            ▼
   NO                 ◇ TRANSMISSION ◇
  ◄────────────────────    ERROR         ── b4
                             ?
                            │ YES
                            ▼
        ┌──────────────────────────────────────────┐
        │  THE  PRINTER OF ECR PRINTS               │
        │  THE  SAME  CONTENTS  AS  THOSE           │
        │  OF  TRANSMITTED  DATA,                   │── b5
        │  ASSIGNED  PRINTER  NO.                   │
        │  AND  PRESET  ITEMS                       │
        └──────────────────────────────────────────┘
                            │
                            ▼
                    ┌───────────────┐
                    │    E  N  D     │
                    └───────────────┘
```

8

# Fig. 7

START — c1

SIGNAL RECEPTION — c2

PRINTING — c3

SIGNAL BACK TRANSMISSION — c4

END — c5

# Fig. 8

PLU0001  STEAK x 1  ~S1

# Fig. 9

PRINTER  NO. 1
KITCHEN  ~SO

PLU0001  STEAK x 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 304 327 (S.G. PITRODA) <br> * figures 1,7; abstract; page 14, lines 25,26 * | 1,2,4,5 ,7,9-18 | G 06 F  15/24 |
| A | US-A-4 396 985 (HIDEO OHARA) <br> * figure 2; abstract; column 4, lines 22-60 * | 4,5,9-17 | |
| A | US-A-4 388 689 (R.W. HAYMAN et al.) <br> * figure 1; abstract; column 2, lines 1-32 * | 1,2,4,5 ,7,9-14 ,16,18 | |

TECHNICAL FIELDS
SEARCHED (Int. Cl.5)

G 06 F
G 08 B
G 07 G

The present search report has been drawn up for all claims

| Place of search | Date of completion of the search | Examiner |
|---|---|---|
| BERLIN | 10-09-1990 | DANIELIDIS S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)